# EUROPEAN PATENT APPLICATION

(11) **EP 2 537 420 A1**
(43) Date of publication of application: **26.12.2012**
(21) Application number: 10783006.9
(22) Date of filing: 07.06.2010
(51) Int. Cl.: A23L 1/0532, C12G 3/00, A23P 1/08

(54) **METHOD FOR THE STABILISATION OF SPHERES FORMED BY A LIQUID CONTAINING ALCOHOL**

(30) Priority: 06.06.2009 ES 200930274
(71) Applicant: Biogades Food Tech, S.L., 11011 Cadiz (ES)
(72) Inventor: CABALLERO SANCHEZ, Juan Carlos, E-11011 Cadiz (ES); BAREA BARAJON, José Manuel, E-11011 Cadiz (ES); BOTO ORTEGA, Feliciano Guillermo, E-11011 Cadiz (ES); RAMIREZ FAJARDO, Antonio F., E-11011 Cadiz (ES)
(74) Representative: Vicario Cubillo, Marcos
(86) International application number: PCT/ES2010/000249
(87) International publication number: WO 2010/139824

(57) **Abstract**

Procedure for the stabilization of spherifications formed starting from an alcoholic content liquid from which the spheres are obtained preserving them stable through time, keeping the optimum physical, chemical and organoleptic properties of the alcoholic liquid contained inside them.

## Description

### Aim of the invention

This application for patent for invention consists of a procedure for stabilization of spheres made from alcoholic content liquid. The procedure is included within the alimentary techniques and it adds significant innovations and advantages to the spherification methods currently known, and enables to obtain spheres with different textures in their surface and content, making possible to keep them for a long time without any modification of such textures.

### Backgrounds of the invention

The different spherification processes are already well-known techniques in the culinary field. There are two methods currently known for spherification from liquids, direct spherification and reverse spherification. Neither method achieves the stabilization of spheres obtained from liquids with alcohol content. In fact, after a short time of being formed, these spherifications of liquids with alcohol content, whether lose their structure (the jellified outer coating breaks and the liquid inside is lost) or become completely jellified (the whole sphere turns into gelatine texture and the inner liquid phase disappears), so that their preservation works out impossible and consequently their commercialization.

In the current state of technology, there is no method which makes possible the stabilization of spheres made up from liquid with alcoholic content, preserving in good conditions and for a long time the physical, chemical and organoleptic properties of the inner alcoholic liquid, enabling their packing, gathering for culinary use, and consumption according to the quantity punctually required, without any decrease in the qualities and properties of the original freshly packed product.

So that the current procedure solves the problem to achieve this kind of spherifications with alcoholic content to reach the market.

### Description of the invention

The present invention refers to a procedure for the stabilization of spheres made from alcoholic content liquids. Alcoholic beverages such beer, wine, vermouth, champagne, cava, liquor and high alcohol beverages equal or higher than 37.5 % ABV (whisky, rum, gin, vodka, brandy, cognac, and mixture of these beverages with non-alcoholic drinks) are included in this concept.

The method of the invention makes feasible the long-lasting preservation of the spheres, once they are stabilized, in optimum conditions for merchandising, long after being made.

The biggest problem faced by the methods for spherification of alimentary liquids with alcoholic content using the *direct spherification technique* is the fact that spheres become completely jellified shortly after being formed, instead of obtaining a stable sphere with two different textures, jellified on the outside and liquid on the inside. When the *reverse spherification technique* is used, the sphere structure is destroyed in a short time, loosing the alcoholic liquid of the inside. Consequently, as a result of both techniques the spheres tend to stick among them while being made up.

For that reason it was necessary to find out a procedure for the stabilization of spheres with alcoholic content liquids in which those spheres, once formed, remain stable through time, avoiding all the problems stated above, and enabling their industrial production and commercialization.

In the current invention the method for stabilization of spheres made from alcoholic content liquid, consists of two phases, the formation of spheres and the stabilization of spheres.

The formation of the spheres involves three steps:
- Formation of a solution made of liquid with alcoholic content, thickener, and gluconolactate, which will be called "starting liquid".
- Formation of a solution made of water and sodium alginate.
- Mixing of the first solution with the second one.

The difference in temperature between the first and the second solution will preferably be less than 5º C, being lower the temperature of the starting liquid.

The mixture of solutions will last approximately 180 to 210 seconds, by continuous contact between the starting liquid and the sodium alginate solution.

In a second stage of mixing, once the spheres are formed, they are poured into water in order to break the formation of outer coatings, that is, to break the jellification process.

The spheres will remain into the water for approximately 30 seconds.
Immediately the drying of the spheres must be carried out to remove any excess water, so that the resulting spheres consist of an internal liquid composition and a thin external coating of solid appearance.

After the formation of the spheres and drying, their stabilization is achieved by pouring them into a liquid solution. This liquid solution, which is called "stabilization solution", contains a liquid equal in composition to the starting liquid, to say, with the same composition that the internal alcoholic content liquid of the spheres. The stabilizing liquid will preferably contain xhantan, nevertheless other proper alimentary thickeners (such as agar-agar, arginine, carrageenan, collagen, cornstarch, gelatine, guar gum, carob gum and pectin) produce the same stabilizing effect.

The concentration level of xhantan (or other thickener) will be lower in the stabilization solution than in the starting liquid.

In contact with the air and before the stabilization, the spheres obtained lose their spherical structure as time goes by, due to the leaking of liquid from the inside to the outside, caused by the different inside and outside pressures and the porous structure of the coatings.
The inventive innovation of the current patent lies in obtaining a balance of pressures between the inside and the outside of the spheres by pouring them into the stabilizing solution described above. Such balance is produced by the effect of an equitable internal-external-internal flow, which results from the immersion of the spheres into the stabilizing solution. This solution enables the preservation of the spheres structure avoiding their internal jellification, keeps the stabilized spheres divided, without sticking among them in clusters, and preserves the porous structure of the alginate membrane, making this way possible the preservation of the spheres with the same physical properties obtained during their formation and the same organoleptic qualities of the internal alcoholic liquid, as well as a pearl-shaped appearance.

### Description of a Preferential carrying out

As an example of carrying out the procedure for preparation of spherifications starting from alcoholic content liquids, an initial mixture of wine and xhantan will be firstly used, shaking the mixture to its complete solution, next Gluconolactate will be added, shaking until it is completely dissolved. The quantities are shown in the table below:

**TABLE 1**

| **Ingredient** | **Weight (qr)** | **Percentage** |
|---|---|---|
| Wine | 150 gr. | 98,36 % |
| Xantana | 0,50 gr. | 0,33 % |
| Gluconolactate | 2,00 gr. | 1,31 % |

Next a second mixture will be prepared using sodium alginate and water, according to the quantities shown in the table 2.

**TABLE 2**

| **Ingredient** | **Weight (gr.)** | **Percentage** |
|---|---|---|
| Water | 500 gr. | 99,54 % |
| Sodium alginate | 2,30 gr. | 0,46 % |

The solution made up from alcoholic content liquid, thickener and gluconolactate (starting liquid), must be kept standing preferably 24 hours and, in any case not less than 2 hours, to remove overpressure.
After that, in a first stage of mixing and in order to get the formation of the spheres, a syringe or a measuring spoon must be used to pour doses of the mixture one into the mixture two.

The pouring will be done separately, drop by drop, and the formation time will last from 180 to 210 seconds.

The temperature of the solution or mixture one (wine, xhantan and gluconolactate) will be between 3º and 5º C while the temperature of the solution or mixture 2 will be between 22ºand 25º C.

Then in a second mixing stage the spheres are submerged in water, which will be between 22º and 25º C, for approximately 30 seconds.

This way the breaking of the jellification reaction in the spheres coatings is achieved and they become formed as desired, avoiding the jellification and the formation of such a weak coating that can be broken.

This way the breaking of the jellification reaction in the spheres coatings is achieved and they become formed as desired, avoiding the jellification and the formation of such a weak coating that can be broken.

## Claims

1. ^{st}. - Procedure for stabilization of spheres made up from alcoholic content liquid with the aim of obtaining spheres for alimentary use, whether in direct consumption or in culinary processes, which comprises a first phase of spheres formation and a second phase of stabilization of such spheres by putting them in contact with a bathing liquid stabilizing solution.

2. ^{nd}. - Procedure for stabilization of spheres, according to the claim above, **characterized by** the following steps in the spheres formation: the preparation of a solution with alcoholic content liquid, thickener and gluconolactate; the preparation of a solution of sodium alginate; and the pouring of the solution of liquid with thickener into the sodium alginate solution.

3. ^{rd}. - Procedure for stabilization of spheres according to the claims above **characterized by** the fact that, during the step of pouring the solution of liquid with thickener and gluconolactate into the sodium alginate solution; the difference in temperature of both solutions is less than 5ºC, being higher the temperature of the solution made of sodium alginate.

4. ^{th}. - Procedure for the stabilization of spheres, according to the claims above, characterized because in the stabilization phase, the solution in which the spheres are immersed contains xhantan or another thickener.

5. ^{th}. - Procedure for the stabilization of spheres according to the claims above, characterized because the liquid used in the stabilizing solution contains at least an alcohol content liquid, of the same nature than the starting liquid.

6. ^{th}. - Procedure for the stabilization of spheres according to the claims above, **characterized by** a lower thickener concentration in the stabilizing solution than in the starting liquid used in the spheres formation.

7. ^{th}. - Procedure for the stabilization of spheres according to the claims above, characterized because the spheres stability and durability derive from the effect of balanced pressures between the spheres inside and outside, which results from immersing them into the stabilizing solution.
